# EUROPEAN PATENT SPECIFICATION

(11) **EP 1 566 042 B1**
(45) Date of publication and mention of the grant of the patent: **07.11.2007**
(21) Application number: 02783419.1
(22) Date of filing: 25.11.2002
(51) Int. Cl.: H04L 29/08, H04L 12/58

(54) **METHOD AND SYSTEM FOR SESSION MANAGEMENT WHEREIN A CLIENT SESSION IDENTIFIER IS USED**
VERFAHREN UND SYSTEM ZUM SESSION-MANAGEMENT UNTER VERWENDUNG EINER CLIENT-SESSION-KENNUNG
PROCEDE ET SYSTEME DE GESTION DE SESSIONS UTILISANT UN IDENTIFICATEUR DE SESSIONS CLIENT

(43) Date of publication of application: 24.08.2005
(73) Proprietor: Nokia Corporation, 02150 Espoo (FI)
(72) Inventor: PAKKALA, Timo, FIN-02170 Espoo (FI)
(74) Representative: Andersson, Björn E.
(86) International application number: PCT/IB2002/004917
(87) International publication number: WO 2004/049673

(56) References cited:
- WO-A2-01/50701
- US-A- 2002 167 965
- US-A1- 2002 055 350
- US-B1- 6 201 962
- US-B1- 6 243 739
- US-B1- 6 351 772

## Description

### Technical field

The present invention relates to a method for client session management in an application server connected to a digital mobile communication system and a system for client session management.

### Background

The desire of users to use mobile communication terminals for accessing services available via the Internet is increasing. This desire is about to be fulfilled by both network operators and service providers in that they are offering new an innovative data services among which mobile E-mail access is only one example. Mobile client terminal devices that are used to obtain access to such services have advantages as well as limitations compared to traditional access devices such as personal computers. Special functionality is needed in order to take advantage of the strengths of mobile clients, i.e. mobile communication terminals. However, special functionality is also needed to overcome the limitations of these access devices that necessarily have limited data communication capability, processing capability and presentation capability as compared to traditional personal computer access devices. In short, there is a need to provide new and innovative services to mobile client access devices.

International patent application published with number WO 01/50701 discloses a system for customizing behaviours and interfaces in service invocations. It is shown how a plurality of mobile communication terminals communicate with application servers in a network. Application session management enables a user to access an application from a first terminal and then maintain the session when the user access the application from a second terminal.

US 2002/0167965A1 discloses a system and method for facilitating handoff of a mobile station between base stations, involving session identifiers.

However, a problem related to prior art, which is more or less inherent in mobile communication systems, is that of intermittency of the communication channel between a mobile client device and an application server. The intermittency may be either accidental, such as when a connection is lost due to a radio communication interruption during a circuit switched connection. The intermittency may also be a matter of choice, such as when connectionless packet switched communication is used. Examples of such connectionless communication is becoming more common as the mobile communication systems evolve into the so-called "third generation" and terminals are provided with software applications capable of communicating with server applications on the Internet.

Furthermore the connection between a mobile client device and accessed services in an application server may cause problems as there are different protocols which should work together when mobile client device is requesting services. Better session management is needed to provide better service to mobile client devices.

### Summary of the invention

An object of the present invention is hence to overcome the drawbacks of prior art methods and systems for session management, as briefly discussed above.

This is achieved by way of a method according to claims 1 and 13, a system according to claim 9 and a computer program according to claims 14 and 15, as specified below.

A method according to the invention is a method of client session management in an application server. The client application server is capable of communicating via a connectionless communication protocol with at least one client mobile communication terminal, where the terminal is located in a digital mobile communication system. The method of client session management comprises maintaining at least a first client session identifier, which is associated with a client terminal identifier, and comprises receiving, from the client terminal, a request to initiate a first client application session, as well as receiving first client specific data, where said data comprises a first mobile terminal identifier, e.g. a mobile station integrated services digital network number and a hash code. An association is made, e.g. by a calculation, of a first client session identifier with the first mobile terminal identifier. The first client session identifier is then stored in a session management database. Maintenance of communication between the client terminal and the application session is then enabled, including receiving a communication request and verifying that the communication request originate from the first client terminal.

A client session management system according to the invention is arranged to communicate via a connectionless communication protocol with at least one client mobile communication terminal in a digital mobile communication system, and comprises means for performing such a method.

In another aspect, the invention overcomes drawbacks of prior art by providing a method of client session management in an application server in a digital mobile communication system. The application server communicates with a client mobile communication terminal by subsequent connectionless communication protocol messages. The server receives a request for a service through a service application server from a service application. Then, the server sets a first client session identifier, which associated with a client terminal identifier based on the request. The first client session identifier associated with a client terminal identifier of said client mobile communication terminal is then maintained. The session identifier indicates the session with said client terminal between the subsequent messages. At least part of a service of the service application is retrieved from the service application to the application server and the session identifier is the same during the communication both between the client terminal and the application server and the client terminal and the service applicaton through the service application server.

Preferred embodiments may further include use of a time-out procedure capable of disabling communication between the client terminal and the application server, where the disabling is being dependent on a time-out limit.

In one preferred embodiment, handling of E-mail messages is illustrated where lists of messages are handled. A message contains a number of headers of items retrieved from an E-mail server inbox to an application server and a predefined number of these headers can be sent once from the application server to the mobile terminal by taking into account the limitations of the used systems. Next available message comprises a predefined number of headers and actually the list of messages in the list of headers.

An advantage of the invention is that it provides a more flexible use of mobile communication terminals when accessing services in a connectionless environment, such as the Internet.

### Short description of the drawings

Figure 1 illustrates schematically a mobile communication system connected to a packet switched network including a system according to an embodiment of the present invention.

Figure 2 is a flow chart of a method of establishing and managing a client session according to an embodiment of the present invention.

### Preferred embodiments

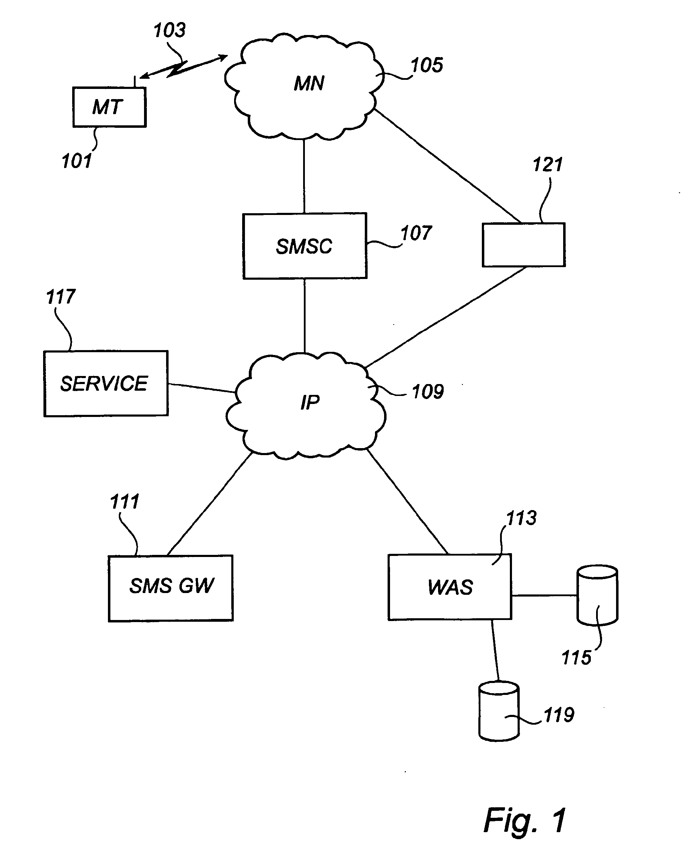

Referring initially to figure 1, a mobile client terminal 101 is via a radio interface 103 connected to a digital mobile communication network 105. The digital mobile communication network 105 may be of any kind known in the art, such as the very widely used GSM/GPRS system.

Connected to the mobile network 105 is a short message service centre 107 (SMSC). The SMSC 107 is capable of receiving text messages from the mobile terminal 101, and any other mobile terminal connected to the mobile network 105, and convey the messages to receivers in a packet switched data network 109, e.g. to an application server 113 as will be discussed further below. The short message service centre 107 is connected to the packet switched (Internet) network 109 and uses preferably the HTML, HTTP, and TCP/IP Internet network protocols. Short messages are transferred between the service centre 107 and mobile stations. The user submits to the service centre 107 a short message containing an identifier of a service in order to handle it in an application server 113. The application server 113 recognises the service requested and forwards the message to a service application server 117 capable of handling the service. Based on service request the service is delivered through the application server 113 to the mobile client device 101, which receives the requested information in a short message. The mobile station 101 processes the received message and renders it to the user according to the selected procedure.

The service centre 107 is connected to the mobile communication network through a gateway (not shown) as the person skilled in the art realizes. The service centre 107 is assigned, e.g., a dedicated ISDN number in the number space of the GSM network, and the mobile terminal uses the ISDN number for addressing the short message to the service centre 107.

The mobile network 105 and the packet switched data network 109 are interconnected via a path 121, which may include any necessary functionality for conveying information between the networks. For example, the path 121 may include a gateway switching centre (GMSC) as the skilled person will understand.

By messaging the user may be charged via the ususal charging system utilized by the telecommunication provider such as telephone service provider. For example, the user has sent SMS messages to the application server 113. The operator of the wireless network 105 may now invoice this service separately by using user's phone bill, the extra or lower charge comprising the charge of the service usage can be used.

Connected to the packet switched network 109 is a short message service gateway 111 (SMS gateway) and an application server 113. Whenever the terminal sends a session request to the application server 113, the request is conveyed by the SMSC 107 and the packet switched network 109 to the SMS gateway 111. The SMS gateway 111 converts the request and forwards it to the application server 113. The request, when sent from the SMS gateway 111, holds information including a mobile terminal identifier, e.g. the mobile station integrated services digital network number (MSISDN).

The application server 113 updates a session manager database 115 and transmits a response back to the terminal 101 through the SMS gateway 111.

Subsequent requests from the terminal 101 are handled in the application server 113 by making use of the session object in the application server session manager database 115. Hence, it is possible for the application server 113 to track the information that needs to be transmitted to the mobile terminal 101.

The application server 113 is running session management software capable of supporting multiple client terminals, such as the terminal 101 shown in figure 1, and enables a user of a terminal to reach an application running on the application server 113. Such an application may be any kind of application. For the purpose of illustration, an E-mail application will be used in the description to follow.

The application server 113 receives a request from the client terminal 101, preferably based on a command sent by the user. The command may be included in a predefined list of available commands for communication maintained by the application server 113, e.g. in its session manager database 115. In the present case the application server 113 maintains an E-mail messaging service, and hence there is no continuous connection between the user and the server, as would be the case if the application server 113 was running an application requiring more or less constant interaction with the user.

The application server 113 also maintains a communication database 119 for identifying the user and keeping track of earlier commands sent by the user and where the messages have been forwarded. This communication database 119 retains information for a predetermined time period, enabling the user to gain benefit of earlier sent commands in later requests if the earlier commands have been sent within the predetermined time period.

To exemplify an E-mail session, the user sends "m", which creates an active list for a predefined time limit, e.g. for 20 minutes. These mails can be accessed by sending a predefined message identifiable in the application server 113, e.g. 1, 2, next, etc. Based on the command, the application server 113 will start to maintain the session.

When user requests mails by entering "m" or folders, the result is usually a numbered item list, such as:
1. Denver Jona: Project status
2. Stones Tina: Copyright issues
3.McAllen Mar: Conference schedule

In a mail list, the sender and subject are cut to fit in a SMS message.

Sending a number (1) from the list within the time limit, will bring that item:
- in a mail list, the content of the mail (1):
   "The project is doing well in this step. The research is within schedule. There is lack of sales manager. Will be fixed by May. Best regards, Jonathan"
- in a folder list, the content of the folder: subfolders and mails.

The numbers in a mail list can also be used in conjunction with commands such as reply, forward, delete, mark read, and headers.

The list is valid until a new list is created or for a certain time limit, e.g. 20 minutes. If the user gets a message containing: "No such mail item in your list", this may mean that the list has expired because more than 20 minutes have passed, or the user sent another command which created a new list for a new session maintenance, and the number requested was not on the list.

If automatic notification brings a new list or mail during the set time limit while the user has an active list, the application server 113 creates a parallel session (buffer) for this list or mail. The message starts with 0/ (zero slash) and referring to this mail or list must be done by inserting the same figure in the beginning of the text message. User gets:
1/3
0/
(Denver Jona:
FWD : Applied)

Then sends: 0/ next to get the next text message page. In certain situations, the message may start with other numbers also, e.g. 1/ or 2/.

During the set time limit, e.g. 20 minutes, a notify message brings another list of E-mail messages, starting with 0/. These messages are received in the inbox after the 20 minutes session had started but they are received prior to the set time limit. These E-mail messages may be accessed by sending 0/1, 0/2, 0/next, etc. E-mail messages have arrived after the "m" has been sent and the active list was generated.

Active list:
1. Denver Jona: Project status
2. Stones Tina: Copyright issues
OR-list by notify message:
0/
1. Smith Steve:Re: Update
2. Brown Jane:

The session manager software running on the application server 113 further comprises a multi-user platform to enable handling of multiple clients, i.e. running multiple client applications, on the server 113 and a command platform to interpret the commands sent by the users. When a user initially connects to the application server 113 with a mobile communication terminal by sending, e.g., an SMS message. The platform session manager software application in the server 113 stores an identification code, preferably based on the identification number of the terminal, i.e. the MSISDN of the mobile terminal, and the command sent by the user in the message. The information is stored in the communication database 119 where each user having its own user specific information.

The information regarding each user may comprise a user name and password corresponding to various MSISDN and at least time information, i.e. when a session was initiated. Further the information may comprise the relevant network address, i.e. where to go to find email server etc. to retrieve the unread E-mail messages in an inbox of the E-mail account. When "m" has arrived the server will locate the user and start to find the E-mail message headers of the identified user. The session manager software then selects the selected messages for forwarding them to the mobile terminal 101. The header in this context means, e.g., a defined number of marks from the "From field" and the title of the message.

The session manager software keeps the session alive depending on the commands received and makes a decision whether the incoming commands will be handled in the same session or in another session. For example, they may be handled in the same session, or in parallel session by separating a command used by the user or a single session so that only one session can be maintained so that if the user command triggers a new session then only the new session will exist.

The session manager software also forwards a request corresponding to the command in the received message for the user to the software application managing an E-mail account of the user. The information defined by the command is selected, taking into consideration the limitations of the communication protocol used by the user or further the user parameters like user terminal, command user typed, etc. or per predefined criteria. Such limitations may be, in a case where communication is via SMS messaging, that only a certain number of E-mail headers can be sent to the mobile terminal 101 in one transmission. The session manager maintains the information of the messages sent to the mobile terminal 101 and also possible list of notified messages occurred after the sessions started.

After obtaining the requested information from the software application managing the E-mail account, the server 113 sends the obtained information by using the same communication protocol to the user, for example an SMS message. When the user subsequently connects with the server 113, within the predetermined time period using a subsequent command, the session manager software interprets the command and forwards it to the software managing the users E-mail account. Thereby a transfer of subsequent information is enabled regarding the E-mail account, where the information is depending on the previous commands during the first connection.

After the predetermined time period has passed, the users identification code and relating commands are deleted so subsequent communication is considered as being an initial communication.

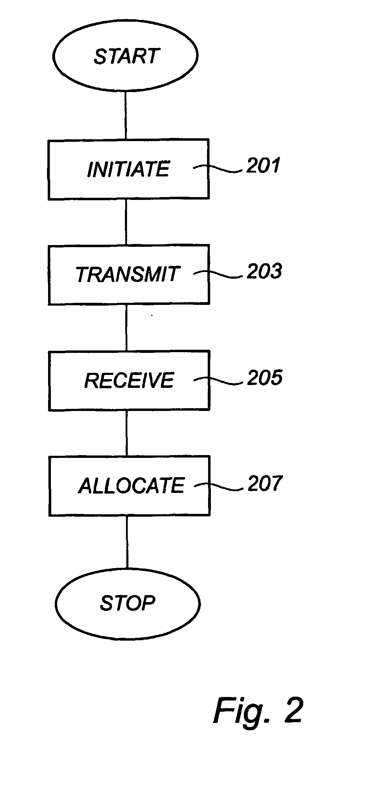

Referring now to figure 2, a method according to the invention will be discussed in terms of a number of steps performed in the application server 113 and other components of the system illustrated in figure 1.

First, in an initiation step 201 the mobile terminal 101 initiates a connectionless session with the application server 113. The terminal 101 transmits in a transmission step 203 a SMS request destined for the application server 113. After receiving said request, in a reception step 205, session manager software running in the application server 113 allocates, in an allocation step 207, a session object for the mobile terminal 101, from which a predefined information exists in the application server. The session object performs the function of maintaining session data and terminal information in order to provide continuous communication with the mobile terminal 101 although the communication between the application server 113 and the mobile terminal is connectionless messaging. The communication session identifier is the unique MSISDN number with a hash code, so the user communicating through messaging with the application server 113 is identified by the terminal 101.

The session manager software keeps track of messages sent to the mobile terminal 101 and the messages received from the service server 117, the session manager software sends those messages from the application server 113 to the mobile terminal 101 which are not yet sent and changes the status of these messages as sent status in the application server 113, or sends a subsequent message in a list of messages.

The session manager software also keeps information about the commands available. The additional information request of a certain E-mail message by the mobile terminal 101 will be handled as it was handled in the same session in an earlier request and the request initiates a retrieval of that specific information from the specified location of the user information, e.g. from the E-mail (service application) server or from the application manager server 113. The session manager software operates retrieval of the information and stores the new content in the application server 113 accessible via commands sent from the user mobile terminal 101. Thus, limitations in the user terminal 101 and the communication protocol used will affect how much of that content can be sent to the mobile terminal 101 at once.

Alternative ways to communicate between mobile terminal and application server is to use e.g. WAP or other available communication method like GPRS, UMTS etc.

The session management software may be created by employing any known software programming tool and the software may be embodied in any form, such as a computer program comprising program code stored on a software medium or transmitted from a software source server using any relevant transmission technique.

## Claims

1. A method of client session management in an application server (113) capable of communicating via a connectionless communication protocol with at least one client mobile communication terminal (101) in a digital mobile communication system (105), the method comprising maintaining at least a first client session identifier being associated with a client terminal identifier, and comprising the steps of:
- receiving, from the client terminal (101), a request to initiate a first client application session,
- receiving, from the client terminal (101), first client specific data, said data comprising a first mobile terminal identifier,
- associating a first client session identifier with said first mobile terminal identifier,
- storing said first client session identifier in a session management database (115),
- enabling maintenance of communication between the client terminal (101) and the application session, including receiving at least one communication request and verifying that said at least one communication request originate from said first client terminal (101).

2. A method according to claim 1, wherein the association of a first client session identifier with said first mobile terminal identifier includes a calculation of the first client session identifier.

3. A method according to claim 1 or 2, wherein the step of enabling maintenance of communication between the client terminal (101) and the application server (113) involves use of a time-out procedure capable of disabling communication between the client terminal (101) and the application server (113), said disabling depending on a time-out limit.

4. A method according to claim 3 wherein the communication session comprises a plurality of connection requests from the client terminal (101) and service retrievals to terminals within predefined time limit.

5. A method according to any one of claims 1-4, wherein the reception of first client specific data includes reception of a mobile station integrated services digital network number and a hash code.

6. A method according to any one of claims 1-5, wherein the session management depends on commands received from the client mobile communication terminal (101).

7. A method according to any one of claims 1-5, wherein those messages are sent from the application server (113) to the mobile terminal (101) which are not yet sent and changes the status of these messages as sent status in the application server (113).

8. A method according to any one of claims 1-5, wherein the next available message in a list of messages is sent.

9. A client session management system arranged to communicate via a connectionless communication protocol with at least one client mobile communication terminal (101) in a digital mobile communication system (105), the system comprising means for maintaining at least a first client session identifier being associated with a client terminal identifier, and comprising means for:
- receiving, from the client terminal (101), a request to initiate a first client application session,
- receiving, from the client terminal (101), first client specific data, said data comprising a first mobile terminal identifier,
- associating a first client session identifier with said first mobile terminal identifier,
- storing said first client session identifier in a session management database (115),
- enabling maintenance of communication between the client terminal (1011) and the application session, including means for receiving at least one communication request and means for verifying that said at least one communication request originate from said first client terminal (101).

10. A system according to claim 9, where the means for association of a first client session identifier with said first mobile terminal identifier includes means for calculating the first client session identifier.

11. A system according to claim 9 or 10, where the means for enabling maintenance of communication between the client terminal (101) and the application server (113) include time-out means capable of disabling communication between the client terminal (101) and the application server (113), said disabling depending on a time-out limit.

12. A system according to any one of claims 9-11, where the means for reception of first client specific data includes means for reception of a mobile station integrated services digital network number and a hash code.

13. A method of client session management in an application server (113) in a digital mobile communication system (105), the method comprising the steps of:
- communicating with a client mobile communication terminal (101) by subsequent connectionless communication protocol messages,
- receiving a request for a service through a service application server (117) from a service application,
- setting a first client session identifier being associated with a mobile terminal identifier based on the request,
- maintaining the first client session identifier being associated with a mobile terminal identifier of said client mobile communication terminal (101), wherein said session identifier indicates the session with said client terminal between the subsequent messages, and
- wherein at least part of a service of the service application is retrieved from the service application to the application server (113), and the session identifier is the same during the communication both between the client terminal (101) and the application server (113) and between the client terminal (101) and the service applicaton through the service application server (117).

14. A computer program comprising software instructions for performing a method according to any one of claims 1-8.

15. A computer program comprising software instructions for performing a method according to claim 13.

## Patentansprüche

1. Verfahren zur Client-Sitzungsverwaltung in einem Anwendungsserver (113), der imstande ist über ein verbindungsloses Kommunikationsprotokoll, mit mindestens einem Client-Mobil-Kommunikations-Endgerät (101) in einem digitalen Mobil-Kommunikationssystem (105) zu kommunizieren, wobei das Verfahren das Beibehalten mindestens einer ersten Client-Sitzungskennung umfasst, die mit einer Client-Endgerätkennung verknüpft ist, und die Schritte umfasst:
- Empfangen einer Anfrage von dem Client-Endgerät (101), eine erste ClientAnwendungssitzung zu initiieren,
- Empfangen erster clientspezifischer Daten von dem Client-Endgerät. (101), wobei die Daten eine erste Mobil-Endgerät-Kennung umfassen,
- Verknüpfen einer ersten Client-Sitzungskennung mit der ersten Mobil-Endgerät-Kennung,
- Speichern der ersten Client-Sitzungskennung in einer Sitzungsverwaltungsdatenbank (115),
- Ermöglichen eine Kommunikation zwischen dem Client-Endgerät (101) und der Anwendungssitzung beizubehalten, einschließlich Empfangen mindestens einer Kommunikationsanfrage und Prüfen, dass die mindestens eine Kommunikationsanfrage von dem ersten Client-Endgerät (101) stammt.

2. Verfahren nach Anspruch 1, wobei die Verknüpfung einer ersten Client-Sitzungskennung mit der ersten Mobil-Endgerät-Kennung eine Berechnung der ersten Client-Sitzungskennung einschließt.

3. Verfahren nach Anspruch 1 oder 2, wobei der Schritt des Ermöglichens eine Kommunikation zwischen dem Client-Endgerät (101) und dem Anwendungsserver (113) beizubehalten eine Verwendung eines Time-Out-Vorgangs mit sich bringt, welcher imstande ist, die Kommunikation zwischen dem Client-Endgerät (101) und dem Anwendungsserver (113) zu deaktivieren, wobei das Deaktivieren von einer Time-Out-Grenze abhängt.

4. Verfahren nach Anspruch 3, wobei die Kommunikationssitzung mehrere Verbindungsanfragen von dem Client-Endgerät (101) und Dienstabfragen an Endgeräte innerhalb einer vorbestimmten Zeitgrenze umfasst.

5. Verfahren nach irgendeinem der Ansprüche 1-4, wobei der Empfang der ersten clientspezifischen Daten einen Empfang einer Mobilstationsnummer eines diensteintegrierten digitalen Netzwerks und einen Hash-Code einschließt.

6. Verfahren nach irgendeinem der Ansprüche 1-5, wobei die Sitzungsverwaltung von Befehlen abhängt, die von dem Client-Mobil-Kommunikations-Endgerät (101) empfangen werden.

7. Verfahren nach irgendeinem der Ansprüche 1-5, wobei die Nachrichten von dem Anwendungsserver (113) an das Mobilendgerät (101) gesendet werden, die noch nicht gesendet wurden und der Status dieser Nachrichten als Gesendet-Status in dem Anwendungsserver (113) geändert wird.

8. Verfahren nach einem der Ansprüche 1 bis 5, wobei die nächste verfügbare Nachricht in einer Nachrichtenliste gesendet wird.

9. Clientsitzungs-Venvaltungssystem, das eingerichtet ist, über ein verbindungsloses Kommunikationsprotokollmit mindestens einem Client-Mobil-Kommunikations-Endgerät (101) in einem digitalen Mobil-Kommunikationssystem (105) zu kommunizieren, wobei das System Mittel zum Beibehalten mindestens einer ersten Client-Sitzungskennung umfasst, die mit einer Client-Endgerätkennung verknüpft ist, und Mittel umfasst zum:
- Empfangen einer Anfrage von dem Client-Endgerät (101), eine erste Clientanwendungssitzung zu initiieren,
- Empfangen erster clientspezifischer Daten von dem Client-Endgerät (101), wobei die Daten eine erste Mobil-Endgerät-Kennung umfassen,
- Verknüpfen einer ersten Client-Sitzurigskennung mit der ersten Mobil-Endgerät-Kennung;
- Speichern der ersten Client-Sitzungskennung in einer Sitzungsverwaltungsdatenbank (115),
- Ermöglichen eine Kommunikation zwischen dem Client-Endgerät (101) und der Anwendungssitzung beizubehalten, einschließlich Mittel zum Empfangen mindestens einer Kommunikationsanfrage und Mittel zum Prüfen, dass die mindestens eine Kommunikationsanfrage von dem ersten Client-Endgerät (101) stammt.

10. System nach Anspruch 9, wobei das Mittel zum Verknüpfung einer ersten Client-Sitzungskennung mit der ersten Mobil-Endgerät-Kennung Mittel zum Berechnen der ersten Client-Sitzungskennung einschließt.

11. System nach Anspruch 9 oder 10, wobei die Mittel zum Ermöglichen eine Kommunikation zwischen dem Client-Endgerät (101) und dem Anwendungsserver (113) beizubehalten Time-Out-Mittel einschließen, welche imstande sind, die Kommunikation zwischen dem Client-Endgerät (101) und dem Anwendungsserver (113) zu deaktivieren, wobei das Deaktivieren von einer Time-Out-Grenze abhängt.

12. System nach irgendeinem der Ansprüche 9-11, wobei die Mittel zum Empfangen der ersten clientspezifischen Daten Mittel zum Empfangen einer Mobilstationsnummer eines diensteintegrierten digitalen Netzwerks und einen Hash-Code einschließt.

13. Verfahren zur Client-Sitzungsverwaltung in einem Anwendungsserver (113), in einem digitalen Mobil-Kommunikationssystem (105), wobei das Verfahren die Schritte umfasst
- Kommunizieren mit einem Client-Mobil-Kommunikations-Endgerät (101) durch aufeinander folgende verbindungslose Kommunikationsprotokoll-Nachrichten,
- Empfangen einer Anfrage nach einem Dienst durch einen Dienstanwendungsserver (117) von einer Dienstanwendung,
- Setzen einer ersten Client-Sitzungskennung, welche mit einer Mobilendgerät-Kennung verknüpft ist, basierend auf der Anfrage,
- Beibehalten der ersten Clientsitzungskennung, welche mit einer Mobilendgerät-Kennung des Client-Mobil-Kommunikationsendgeräts (101) verknüpft ist, wobei die Sitzungskennung die Sitzung mit dem Client-Endgerät zwischen den aufeinander folgenden Nachrichten anzeigt, und
- wobei mindestens ein Teil eines Dienstes der Dienstanwendung von der Dienstanwendung an den Anwendungsserver (113) abgerufen wird, und die Sitzungskennung während der Kommunikation dieselbe ist, sowohl zwischen dem Client-Endgerät (101) und dem Anwendungsserver (113) als auch zwischen dem Client-Endgerät (101) und der Dienstanwendung durch den Dienstanwendungsserver (117).

14. Computerprogramm umfassend Software-Anweisung zum Durchführen eines Verfahrens gemäß irgendeinem der Ansprüche 1 -8.

15. Computerprogramm umfassend Software-Anweisung zum Durchführen eines Verfahrens gemäß Anspruch 13.

## Revendications

1. Procédé de gestion de session client dans un serveur d'applications (113) capable de communiquer par le biais d'un protocole de communication sans connexion avec au moins un terminal de communication mobile client (101) dans un système de communication mobile numérique (105), le procédé comprenant l'étape consistant à maintenir au moins un premier identificateur de session client qui est associé à un identificateur de terminal client, et comprenant les étapes consistant à :
- recevoir, du terminal client (101), une demande d'initiation d'une première session d'application client ;
- recevoir, du terminal client (101), des premières données spécifiques de client, lesdites données comprenant un premier identificateur de terminal mobile ;
- associer un premier identificateur de session client au dit premier identificateur de terminal mobile ;
- enregistrer ledit premier identificateur de session client dans une base de données de gestion de sessions (115) ;
- autoriser le maintien d'une communication entre le terminal client (101) et la session d'application, comprenant les étapes consistant à recevoir au moins une demande de communication et à vérifier que ladite au moins une demande de communication émane dudit premier terminal client (101).

2. Procédé selon la revendication 1, dans lequel l'association d'un premier identificateur de session client avec ledit premier identificateur de terminal mobile comprend un calcul du premier identificateur de session client.

3. Procédé selon la revendication 1 ou 2, dans lequel l'étape d'autorisation du maintien d'une communication entre le terminal client (101) et le serveur d'applications (113) comprend les étapes consistant à utiliser une procédure de temporisation capable d'interrompre une communication entre le terminal client (101) et le serveur d'applications (113), ladite interruption dépendant d'une limite de temporisation.

4. Procédé selon la revendication 3, dans lequel la session de communication comprend une pluralité de demandes de connexion émanant du terminal client (101), et de demandes de reprise de service avec des terminaux à l'intérieur d'une limite de temps prédéfinie.

5. Procédé selon l'une quelconque des revendications 1 à 4, dans lequel la réception de premières données spécifiques de client comprend la réception d'un numéro de réseau numérique de services intégrés d'une station mobile, et un code de hachage.

6. Procédé selon l'une quelconque des revendications 1 à 5, dans lequel la gestion de session dépend de commandes reçues depuis le terminal de communication mobile client (101),

7. Procédé selon l'une quelconque des revendications 1 à 5, dans lequel des messages qui n'ont pas été encore envoyés, sont envoyés depuis le serveur d'applications (113) vers le terminal mobile (101), et change le statut de ces messages en un statut envoyé dans le serveur d'applications (113).

8. Procédé selon l'une quelconque des revendications 1 à 5, dans lequel le message disponible suivant dans une liste de messages, est envoyé.

9. Système de gestion de session client agencé pour communiquer par le biais d'un protocole de communication sans connexion avec au moins un terminal de communication mobile client (101) dans un système de communication mobile numérique (105), le système comprenant des moyens pour maintenir au moins un premier identificateur de session client qui est associé un identificateur de terminal client, et comprenant des moyens pour :
- recevoir, du client (101), une demande d'initiation d'une première session d'application client ;
- recevoir, du terminal client (101), des premières données spécifiques de client, lesdites données comprenant un premier identificateur de terminal mobile ;
- associer un premier identificateur de session client au dit premier identificateur de terminal mobile,
- enregistrer ledit premier identificateur de session client dans une base de données de gestion de sessions (115),
- autoriser le maintien d'une communication entre le terminal client (101) et la session d'application, comprenant, des moyens pour recevoir au moins une demande de communication et des moyens pour vérifier que ladite au moins une demande de communication émane dudit premier terminal client(101).

10. Système selon la revendication 9, dans lequel les moyens pour une association d'un premier identificateur de session client avec ledit premier identificateur de terminal mobile comprennent des moyens pour calculer le premier identificateur de session client.

11. Système selon la revendication 9 ou 10, dans lequel les moyens pour autoriser un maintien d'une communication entre le terminal client (101) et le serveur d'applications (113) comprend des moyens de temporisation qui sont capables une communication entre le terminal client (101) et le serveur d'applications (113), ladite interruption dépendant d'une limite de temporisation.

12. Système selon l'une quelconque des revendications 9 à 11, dans lequel les moyens de réception de premières données spécifiques de client comprennent des moyens pour la réception d'un numéro de réseau numérique de services intégrés d'une station mobile, et d'un code de hachage.

13. Procédé de gestion de session client dans un serveur d'applications (113) dans un système de communication mobile numérique (105), le procédé comprenant, les étapes consistant à :
- communiquer avec un terminal de communication mobile client (101) par des messages subséquents d'un protocole de communication sans connexion ;
- recevoir une demande pour un service par le biais d'un serveur d'applications de services (117), en provenance d'une application de services ;
- définir un premier identificateur de session client qui est associé à un identificateur de terminal mobile sur la base de la demande ;
- maintenir le premier identificateur de session client qui est associé à un identificateur de terminal mobile dudit terminal de communication mobile client (101), dans lequel ledit identificateur de session indique la session avec ledit terminal client entre les messages subséquents ; et
- dans lequel au moins une partie d'un service de l'application de services est reprise entre l'application de services et le serveur d'applications (113), et l'identificateur de session est le même durant la communication, à la fois entre le terminal client (101) et le serveur d'applications (113), et entre le client (101) et l'application de services par le biais du serveur d'applications de services (117).

14. Programme d'ordinateur comprenant des instructions de programme informatique pour exécuter un procédé selon l'une quelconque des revendications 1. à 8.

15. Programme d'ordinateur comprenant des instructions de programme informatique pour exécuter un procédé selon la revendication 13.
